Europäisches Patentamt

European Patent Office

Office européen des brevets

(11) Veröffentlichungsnummer: **0 481 278 A1**

## EUROPÄISCHE PATENTANMELDUNG

(21) Anmeldenummer: **91116742.7**

(51) Int. Cl.5: **G01C 1/02**

(22) Anmeldetag: **01.10.91**

(30) Priorität: **15.10.90 DE 4032657**

(43) Veröffentlichungstag der Anmeldung:
**22.04.92 Patentblatt 92/17**

(84) Benannte Vertragsstaaten:
**CH DE FR GB IT LI**

(71) Anmelder: **IBP Pietzsch GmbH**
**Hertzstrasse 32-34**
**W-7505 Ettlingen(DE)**

(72) Erfinder: **Opitz, Rigobert, Dipl-Ing.**
**Karlsruher Strasse 9**
**W-7517 Waldbronn(DE)**
Erfinder: **Overlach, Knud, Dr.-Ing.**
**Ernst-Barlach-Ring 11**
**W-7505 Ettlingen 6(DE)**

(74) Vertreter: **Geitz, Heinrich, Dr.-Ing.**
**Postfach 2708 Kaiserstrasse 156**
**W-7500 Karlsruhe 1(DE)**

(54) **Verfahren und Messeinrichtung zur Positionsbestimmung von Raumpunkten.**

(57) Bei dem Verfahren wird ein zu vermessender Raumpunkt anvisiert und gleichzeitig die Zielachse einer Entfernungsmeßeinrichtung präzise auf den Punkt ausgerichtet. Dann werden die Winkelwerte des Raumpunktes in Azimut und Elevation sowie dessen Entfernung vom Ort der Messung bestimmt und anhand dieser Daten die räumlichen Koordinaten des Raumpunktes bzw. dessen Vektor ermittelt. Die Meßeinrichtung besitzt einen um eine Azimut-Achse (12) und eine Elevations-Achse (14) bewegbaren Meßkopf (10) mit einem Zielerfassungsgerät (18,19) und einem Entfernungsmeßgerät (16), deren Zielachsen aufeinander ausgerichtet sind und unter einem vorbestimmten Winkel gegenüber den Bewegungsachsen des Meßkopfs verlaufen, und jeder Bewegungsachse sind ein Stellantrieb und ein Winkelgeber zugeordnet, die ebenso wie das Zielerfassungsgerät und das Entfernungsmeßgerät mit einem Rechner und über letzteren mit einem Bediengerät wirkverbunden sind.

Fig. 1

Beim Vermessen von Raumpunkten kommt es immer darauf an, den Vektor eines zu vermessenden Punktes bzw. dessen Koordinaten in einem räumlichen Koordinatensystem zu bestimmen. Dafür müssen die dem jeweiligen Punkt zugeordneten Winkelwerte in Azimut und Elevation sowie dessen Entfernung vom Meßpunkt ermittelt werden.

Winkelmessungen der vorgenannten Art werden in aller Regel mittels Theodoliten in der Weise durchgeführt, daß ein um eine vertikale Achse drehbares und um eine horizontale Achse schwenkbares Fernrohr mit seiner Zielachse auf den zu vermessenden Raumpunkt ausgerichtet wird. Die Horizontal- und Vertikalwinkel sind dann unmittelbar ablesbar.

Für Distanzmessungen werden hingegen häufig optische Entfernungsmeßgeräte verwendet, die auf dem Prinzip der Dreiecksmessung beruhen. Mittels derartiger Entfernungsmeßgeräte wird ein zu vermessendes Ziel von zwei längs einer Basislinie beabstandeten Punkten aus anvisiert und die Entfernung aus dem Basisabstand der Visierlinien und dem von diesen eingeschlossenen Winkel bestimmt.

Beim Vermessen von Raumpunkten mittels der oben erläuterten Meßeinrichtungen sind immer zwei getrennte Meßvorgänge erforderlich, nämlich die Bestimmung der Winkelwerte einerseits und eine Entfernungsmessung andererseits. Abgesehen davon, daß dies zeitaufwendig und umständlich ist, können sich auch angesichts der getrennten Meßvorgänge und des jeweils gesonderten Ausrichtens der Meßgeräte leicht Meßfehler einschleichen. Die genannte Meßmethode ist auch nicht für Positionsmessungen bei Handhabungssystemen geeignet.

Es ist aber auch schon das Vermessen von Raumpunkten mittels zweier an beabstandeten Orten aufgestellter Theodoliten bekannt, die dann die Endpunkte einer Basis bilden und auf den zu vermessenden Raumpunkt ausgerichtet werden. Eine Rechnerauswertung der an den beiden Theodoliten abgegriffenen Azimut- und Elevationswinkel liefert dann die Raumkoordinaten des Punktes.

Auch dieses Verfahren hat sich als recht aufwendig insofern erwiesen, als dafür mindestens zwei Theodoliten erforderlich sind und naturgemäß deren Basisdaten vor dem Vermessen von Raumpunkten ermittelt werden müssen. Insoweit erscheint auch diese Meßmethode verbesserungsbedürftig.

Durch die Erfindung sollen daher ein verbessertes und einfacher durchführbares Verfahren und eine der Verfahrensdurchführung dienende Meßeinrichtung zur Positionsbestimmung von Raumpunkten geschaffen werden, die insbesondere auch für Positionsmessungen bei Robotern oder sonstigen Handhabungssystemen brauchbar sind.

In verfahrenstechnischer Hinsicht ist diese Aufgabe dadurch gelöst, daß ein zu vermessender Raumpunkt über eine opto-elektronische Bilddarstellung, etwa ein Monitorbild, anvisiert und dabei die Zielachse einer Entfernungsmeßeinrichtung auf die Visierachse und damit auf den Raumpunkt präzise ausgerichtet wird, daß danach die Winkelwerte des Raumpunktes in Azimut und Elevation und dessen Entfernung vom Ort der Messung bestimmt werden und daß aus den vorgenannten Daten die räumlichen Koordinaten des Raumpunktes bzw. dessen Vektor ermittelt werden.

Bei dem Verfahren nach der Erfindung wird somit gleichzeitig mit dem Anvisieren eines zu vermessenden Raumpunktes auf letzteren eine Entfernungsmeßeinrichtung mit ihrer Zielachse präzise ausgerichtet und mithin werden die für die Ermittlung der Raumkoordinaten des Punktes erforderlichen Daten in einem Schritt gewonnen.

Dabei können die zu vermessenden Raumpunkte über ein von Hand bedienbares und mittels Servoantrieb in mindestens zwei Achsen richtbares Stellsystem mittels einer geeigneten Kamera, deren Visierachse auf die Zielachse der Entfernungsmeßeinrichtung ausgerichtet ist, oder auch durch Auswahl einer gespeicherten Blickrichtung bzw. vorgegebenen Position mittels regelbarer Stellantriebe angefahren und damit anvisiert werden.

Selbstverständlich können im Rahmen der Erfindung auch aufeinanderfolgend mehrere Raumpunkte angefahren und nacheinander vermessen werden.

Eine vorteilhafte Ausgestaltung des Verfahrens sieht insoweit das automatische Abscannen eines hinsichtlich seiner Größe über Azimut- und Elevationswinkel frei parametrierbaren Bereichs mit X-Meßpunkten vor, deren Anzahl ebenfalls parametrierbar ist.

In vorrichtungstechnischer Hinsicht ist die oben angegebene Aufgabe durch Schaffung einer Meßvorrichtung der vorgenannten Zweckbestimmung gelöst, bei der ein um eine Azimut-Achse und eine Elevations-Achse bewegbarer Meßkopf mit einem Zielerfassungsgerät und einem Entfernungsmeßgerät ausgerüstet ist, deren Zielachsen präzise aufeinander ausgerüstet sind und unter einem vorbestimmten Winkel gegenüber den Bewegungsachsen des Meßkopfs verlaufen, bei der ferner jeder Bewegungsachse ein Stellantrieb und ein Winkelgeber zugeordnet sind und die Stellantriebe und die Winkelgeber sowie das Zielerfassungsgerät und das Entfernungsmeßgerät mit einem Rechner wirkverbunden sind und schließlich ein Bediengerät mit dem Rechner verbunden ist.

Kennzeichnend für die Meßeinrichtung nach der Erfindung ist somit die Zuordnung des Entfernungsmeßgerätes und der Mittel zum Bestimmen der Winkelwerte zu einem um zwei rechtwinklig zueinander verlaufende Achsen bewegbaren Meßkopf, der darüber hinaus noch mit einer Einrichtung zur genauen Zielpunkterfassung ausgerüstet ist. Angesichts der präzisen Ausrichtung der Zielachsen des Entfernungsmeßgerätes und des Zielerfassungsgerätes aufeinander führt eine Einstellung der Zielachse des Zielerfassungsgerätes auf den zu vermessenden Zielpunkt notwendig zu einer exakten Einstellung des Entfernungsmeßgerätes. Diese Einstellung erfolgt durch Verschwenken des Meßkopfs um dessen Bewegungsachsen infolge Betätigung der den Bewegungsachsen zugeordneten Stellantriebe, wobei durch die den genannten Achsen zugeordneten Winkelgeber die Winkelwerte des anvisierten Zielpunktes erfaßt werden.

Mittels der Meßeinrichtung gelingt somit unter Anwendung des erfindungsgemäßen Verfahrens das präzise Vermessen von Raumpunkten mit einer Einstellung in einem Meßvorgang. Dadurch sind eine wesentliche Vereinfachung in der Handhabung und eine verbesserte Meßgenauigkeit erreicht.

Die Einstellung des Meßkopfs unter präziser Ausrichtung des Zielerfassungsgerätes und des Entfernungsmeßgerätes auf den Zielpunkt gelingt dabei mit Hilfe des mit dem Rechner wirkverbundenen Bediengerätes, das gemäß einer Ausgestaltung der Erfindung einen Zielpunktmonitor mit Zielkreuzeinblendung zum präzisen Anvisieren eines Raumpunktes und einen Datenmonitor zur Meßwertanzeige besitzt sowie für die verschiedenartigsten Funktionen mit diversen Bedientasten und Joy-Stick zum Grob- / Feinrichten versehen ist.

Eine sinnvolle Weiterbildung sieht vor, daß bei der erfindungsgemäßen Meßeinrichtung die beiden Bewegungsachsen des Meßkopfs jeweils rechtwinklig zu den aufeinander ausgerichteten Zielachsen des Zielerfassungsgerätes und des Enfernungsmeßgerätes verlaufen.

Zwar können grundsätzlich die Bewegungsachsen auch unter anderen Winkeln gegenüber den Zielachsen des Zielerfassungsgerätes und des Entfernungsmeßgerätes verlaufen, aber bei einer Anordnung dieser Achsen jeweils rechtwinklig zueinander entfallen ansonsten notwendige Korrekturmaßnahmen, die vermeidbare Rechnerkapazität beanspruchen würden.

Gleiches gilt für eine andere Weiterbildung, nach der die beiden Bewegungsachsen des Meßkopfs einander in einem Punkt schneiden.

Ein einfacher Aufbau der Meßeinrichtung ergibt sich, wenn gemäß einer besonders wichtigen Ausgestaltung der Erfindung der Meßkopf aus einem um eine vertikal verlaufende Achse für Azimut drehbar gelagerten Rahmen und einem in diesem Rahmen um eine horizontal verlaufende Achse für Elevation schwenkbar gelagerten Träger besteht, auf dem das Zielerfassungsgerät und das Entfernungsmeßgerät angeordnet sind.

Bei einer derartigen Ausgestaltung hat sich als zweckmäßig erwiesen, wenn die Stellantriebe zum Verschwenken des Trägers um dessen Elevations-Achse und zum Drehen des den Träger aufnehmenden Rahmens um die Azimut-Achse dem Rahmen zugeordnet und mit der jeweiligen Achse schlupflos wirkverbunden sind. Bei diesen Wirkverbindungen kann es sich insbesondere um Zahnriementriebe handeln.

Gleichfalls als vorteilhaft hat sich bei der vorgenannten Ausgestaltung der erfindungsgemäßen Meßeinrichtung erwiesen, wenn der Winkelgeber der Elevation-Achse in bzw. an dem den Träger aufnehmenden Rahmen und der Winkelgeber der Azimut-Achse im Bereich der Lagerung dieser letztgenannten Achse angeordnet sind.

Ein besonders einfacher und kompakter Aufbau der Meßeinrichtung ergibt sich, wenn nach einem anderen Weiterbildungsmerkmal das Zielerfassungsgerät und das Entfernungsmeßgerät übereinander angeordnet sind, wobei als Zielerfassungsgerät sich die Verwendung einer geeigneten Kamera als vorteilhaft erwiesen hat.

Anstelle nur einer Kamera können auch zwei mit ihren Zielachsen präzise auf die Zielachse des Entfernungsmeßgerätes ausgerichtete Kameras vorgesehen sein, von denen die eine mit einer Weitwinkeloptik und die andere mit einem Teleobjektiv ausgerüstet ist. Im Interesse einer universellen Verwendbarkeit der Meßeinrichtung kann aber auch eine Zoom-Kamera zur Zielpunkterfassung eingesetzt werden.

Im Rahmen der Erfindung kann auch der bzw. einer Kamera unmittelbar eine im Strahlengang angeordnete Entfernungsmeßeinrichtung zugeordnet sein. Auch kann über zwei im Winkel zueinander angeordnete Kameras in an sich bekannter Weise ein Stereobild erzeugt werden.

Für besonders präzise Distanzmessungen hat sich die Verwendung eines Laser-Entfernungsmeßgerätes als vorteilhaft erwiesen.

Anhand der beigefügten Zeichnungen sollen nachstehend eine Meßeinrichtung und das erfindungsgemäße Verfahren zur Positionsbestimmung optisch darstellbarer Raumpunkte erläutert werden. In schematischen Ansichten zeigen:

Fig. 1  einen mit einer Entfernungsmeßeinrichtung und je einer Kamera mit Weitwinkel- bzw. Teleoptik zur Zielerfassung ausgerüsteten Meßkopf zum Vermessen von Raumpunkten in perspektivischer Darstellung,

Fig. 2  eine Schemadarstellung des gesamten Meßsystems mit Elektronik und Bediengerät und

Fig. 3  in einem Ausschnitt aus Fig. 2 das Bediengerät für sich allein in vergrößerter Darstellung.

Bei dem nachstehend anhand der Zeichnung erläuterten Ausführungsbeispiel der Erfindung handelt es sich um ein fahrzeugfest auf einem Waschroboter montierbares System zum Vermessen des Roboterfahrzeugs relativ zu einem zu reinigenden Fahrzeug.

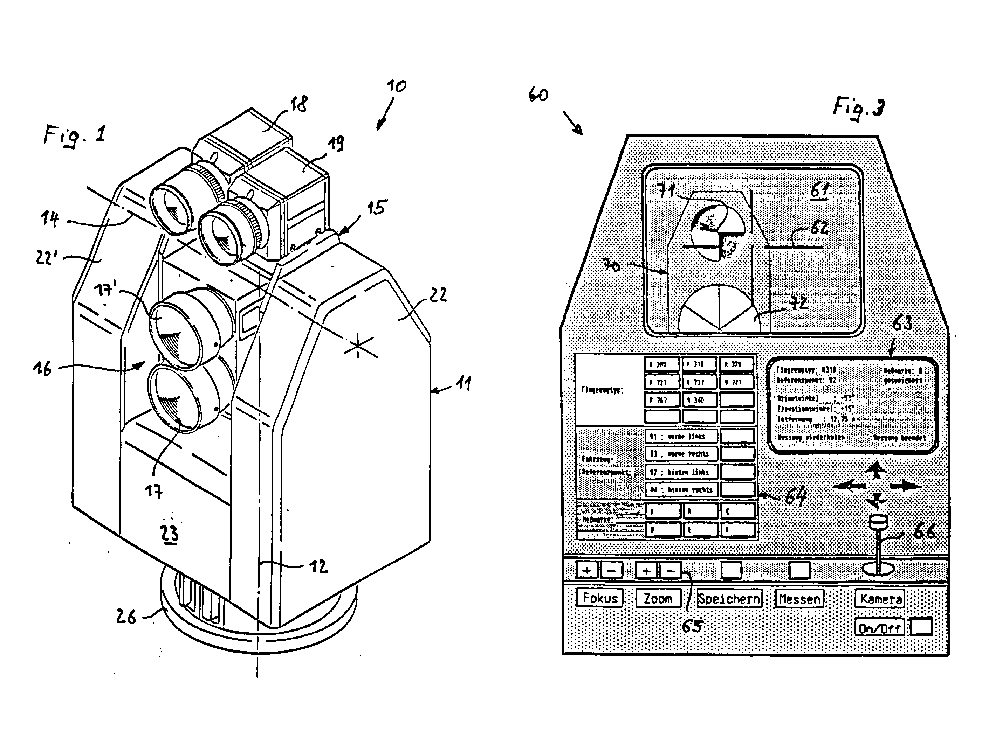

Der in seiner Gesamtheit mit 10 bezeichnete Meßkopf nach Fig. 1 umfaßt einen nach oben offenen gabelförmigen Rahmen 11, der um eine vertikale Achse 12 (Azimut-Achse) drehbar gelagert ist. Innerhalb des gabelförmigen Rahmens ist ein um eine horizontale Achse 14 (Elevations-Achse) schwenkbarer Träger 15 aufgenommen. Dieser Träger ist mit einer Laser-Entfernungsmeßeinrichtung 16 ausgerüstet, deren Optiken 17, 17' für den Aus- und Eintritt des Laserstrahls übereinanderliegend auf einer Seite des Trägers mit rechtwinklig zu der Azimut- und Elevations-Achse 12, 14 verlaufender Zielachse angeordnet sind. Oberseitig auf dem schwenkbar innerhalb des gabelförmigen Rahmens 11 aufgenommenen Träger 15 sind nebeneinander zwei Kameras 18, 19 angeordnet, deren Zielachsen präzise mit der Zielachse der Laser-Entfernungsmeßeinrichtung 16 ausgerichtet sind. Die Kamera 18 ist mit einer Weitwinkeloptik und die Kamera 19 mit einem Teleobjektiv ausgerüstet.

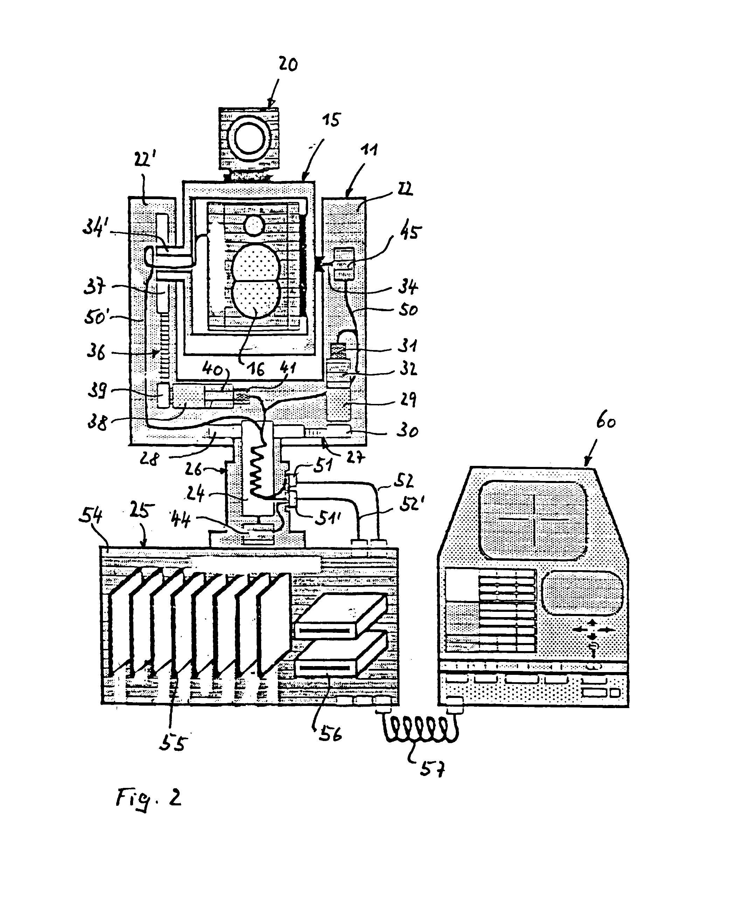

Den Aufbau der Meßeinrichtung im einzelnen zeigt die Schemadarstellung nach Fig. 2. Dabei ist anstelle der beiden Kameras 18, 19 in Fig. 1 eine Zoom-Kamera 20 auf dem innerhalb des Rahmens 11 schwenkbar aufgenommenen Träger 15 mit der Laser-Entfernungsmeßeinrichtung 16 angeordnet.

Der den Träger 15 aufnehmende gabelförmige Rahmen umfaßt zwei parallel zueinander beabstandete Schenkel 22, 22', die durch einen untenliegenden Steg 23 miteinander verbunden sind. Von diesem Steg erstreckt sich unterseitig ein mit dem Rahmen 11 drehfest verbundener Lagerzapfen 24 fort, der innerhalb einer auf einer Steuereinheit 25 fest angeordneten Lagerung 26 drehbar aufgenommen ist. Diese Lagerung bildet zusammen mit dem Lagerzapfen 24 die Azimut-Achse 14. Der Lagerzapfen der Azimut-Achse steht mittels eines Zahnriementriebes 27 mit einer drehfest auf dem Lagerzapfen aufgenommenen Riemenscheibe 28 über ein mit einer Abtriebsscheibe 29 versehenes Getriebe mit einem mittels eines Tachogenerators 31 gesteuerten Stellmotor 32 in schlupfloser Wirkverbindung.

Der Lagerung des innerhalb des gabelförmigen Rahmens 11 aufgenommenen Trägers dienen seitlich von diesem vorstehende Lagerzapfen 34, 34', die drehfest mit dem Träger verbunden und in den nach oben vorstehenden seitlichen Schenkeln 22, 22' des Rahmens drehbar gelagert sind. Die Lagerzapfen 34, 34' bilden die Elevations-Achse 14. Einer dieser Lagerzapfen steht über einen Zahnriementrieb 36 mit einer drehfest auf dem Lagerzapfen 22' angeordneten Riemenscheibe und ein mit einer Abtriebsscheibe 38 versehenen Getriebe 39 mit einem weiteren Stellmotor 40 in schlupfloser Wirkverbindung, die von einem Tachogenerator 41 gesteuert wird.

Mit der Azimut-Achse 12 und der Elevations-Achse 14 ist je ein Winkelgeber 44, 45 zur Anzeige der jeweils eingestellten Drehstellung des Rahmens 11 bzw. der Schwenklage des Trägers 15 wirkverbunden. Der Winkelgeber 44 für die Azimut-Achse 12 ist im Bereich der den Lagerzapfen 24 aufnehmenden Lagerung angeordnet, hingegen der Winkelgeber 45 für die Elevations-Achse 14 im Bereich des den Lagerzapfen 34 des Trägers 15 lagernden Schenkels 22 des Rahmens 11.

Die Winkelgeber 44, 45 für Azimut und Elevation und die Tachogeneratoren 31, 41 sowie der Laser-Entfernungsmesser 16 und die Kamera 20 sind in geeigneter Weise über Sensorkabel 50, 50' und über am Lagerfuß 26 angeordnete Stecker 51, 51' sowie eine diesen zugeordnete Verdrahtung 52, 52' mit der Steuereinheit 25 verbunden. Die Steuereinheit nimmt in einem Elektronikgehäuse 54, auf dem die Lagerung 26 für Lagerzapfen 24 des Azimutrahmens 11 angeordnet ist, eine im einzelnen hier nicht interessierende Steuerelektronik mit Energieversorgung Netzteil, Leistungsstufen und Geschwindigkeits-Lageregelung für Azimut und Elevation auf, ferner eine Schnittstellenelektronik mit externem V24-Interface, Laser-Interface, BAG-Interface, Kamera-Interface und einem Datenspeicher. In der Zeichnung sind insoweit mehrere Einschubkarten 55 und ein Datenspeicher / Floppy 56 angedeutet. Mit der Steuereinheit 25 ist über ein ebenfalls nur angedeutetes Kabel 57 das Bediengerät 60 verbunden, das mit einem Kamera-Monitor 61 in Form eines Flachbildschirms mit eingeblendetem Zielkreuz 62, einem Datenmonitor 63, diversen Bedien- und Anzeigetasten 64, 65 und einem Joy-Stick 66 zur Grob- / Feinrichtung der als Zielerfassungsgerät dienenden Kamera 20 und damit des mit der Kamera ausgerichteten Laser-Entfernungsmessers 16 auf den Zielpunkt versehen ist.

Zum Vermessen der Koordinaten eines Raumpunktes wird der Meßkopf 10 unter Sichtkontrolle durch manuelle Ansteuerung oder durch Vorgabe einer abgespeicherten Blickrichtung bis zur Erfassung des fraglichen Raumpunktes und dessen Darstellung im Monitor 61 des Bediengerätes 60 grob ausgerichtet. In Fig. 3 ist ein auf einer angedeuteten Zielmarke 70 angebrachter Raumpunkt 71 im Monitor dargestellt. Nach der Grobausrichtung wird mittels Joy-Stick eine Feinausrichtung in der Weise vorgenommen, daß ein in den Monitor eingeblendetes Fadenkreuz 62 zur Deckung mit dem Zielpunkt 71 gelangt. Die mit der Zielachse des Zielerfassungsgerätes, bei dem es sich in aller Regel um eine Kamera handelt, ausgerichtete Zielachse des Entfernungsmeßgerätes 16 ist dann ebenfalls präzise auf den Zielpunkt bzw. einen letzterem zugeordneten Referenzpunkt ausgerichtet. Bei der im Monitor 61 in Fig. 3 dargestellten Zielmarke 70 ist unter dem Zielpunkt 71 ein Laserreflektor 72 angeordnet, der bei der Entfernungsmessung mittels des Laser-Entfernungsmeßgerätes 16 den Laserstrahl reflektiert. Die bei der Messung ermittelten Daten kommen dann im Datenmonitor 63 zur Anzeige.

**Patentansprüche**

1. Verfahren zur Positionsbestimmung opto-elektronisch darstellbarer Raumpunkte mittels einer rechnergestützten Meßeinrichtung mit folgenden Verfahrensschritten:

a. Ein zu vermessender Raumpunkt wird über eine opto-elektronische Bilddarstellung anvisiert und dabei die Zielachse einer Entfernungsmeßeinrichtung auf die Visierachse und damit auf den Punkt präzise ausgerichtet,

b. danach werden die Winkelwerte des Raumpunktes in Azimut und Elevation sowie die Entfernung des Punktes vom Ort der Messung bestimmt und

c. aus den vorgenannten Daten werden die räumlichen Koordinaten des Raumpunktes bzw. dessen Vektor ermittelt.

2. Verfahren nach Anspruch 1, dadurch gekennzeichnet, daß ein zu vermessender Raumpunkt über ein von Hand bedienbares und mittels Servoantrieb in mindestens zwei Achsen richtbares Stellsystem mittels einer Kamera, deren Visierachse auf die Zielachse der Entfernungsmeßeinrichtung ausgerichtet ist, anvisiert wird.

3. Verfahren nach Anspruch 1, dadurch gekennzeichnet, daß ein zu vermessender Raumpunkt durch Auswahl einer gespeicherten Blickrichtung bzw. vorgebbaren Position mittels regelbarer Stellantriebe angefahren und damit anvisiert wird.

4. Verfahren nach Anspruch 1, gekennzeichnet durch das Abscannen eines hinsichtlich seiner Größe über Azimut- und Elevationswinkel frei parametrierbaren Bereichs mit X-Meßpunkten, deren Anzahl ebenfalls parametrierbar ist.

5. Meßeinrichtung zum Durchführen des Verfahrens nach einem der Ansprüche 1 bis 4, dadurch gekennzeichnet, daß ein um eine Azimut-Achse (12) und eine Elevations-Achse (14) bewegbarer Meßkopf (10) mit einem Zielerfassungsgerät (18, 19, 20) und einem Entfernungsmeßgerät (16) ausgerüstet ist, deren Zielachsen präzise aufeinander ausgerichtet sind und unter einem vorbestimmten Winkel gegenüber den Bewegungsachsen (12, 14) des Meßkopfs verlaufen, daß jeder Bewegungsachse ein Stellantrieb (32, 40) und ein Winkelgeber (44, 45) zugeordnet sind, daß die Stellantriebe und die Winkelgeber sowie das Zielerfassungsgerät und das Entfernungsmeßgerät mit einem Rechner wirkverbunden sind und daß letztere mit einem Bediengerät verbunden ist.

6. Meßeinrichtung nach Anspruch 5, dadurch gekennzeichnet, daß das Bediengerät (60) einen Zielpunktmonitor (61) mit Zielkreuzeinblendung und einen Datenmonitor (63) zur Meßwertanzeige besitzt sowie mit Bedien- und Anzeigetasten (64, 65) und einem Joy-Stick (66) zum Grob- / Feinrichten des Meßkopfs (10) ausgerüstet ist.

7. Meßeinrichtung nach Anspruch 5 oder 6, dadurch gekennzeichnet, daß die beiden Bewegungsachsen (12, 14) des Meßkopfs jeweils rechtwinklig zu den aufeinander ausgerichteten Zielachsen des Zielerfassungsgerätes (18, 19, 20) und des Enfernungsmeßgerätes (16) verlaufen.

8. Meßeinrichtung nach einem der Ansprüche 5 bis 7, dadurch gekennzeichnet, daß die beiden Bewegungsachsen (12, 14) des Meßkopfs (10, 15) einander in einem Punkt schneiden.

9. Meßeinrichtung nach einem der Ansprüche 5 bis 8, dadurch gekennzeichnet, daß der Meßkopf (10) aus einem um eine vertikal verlaufende Achse (12) für Azimut drehbar gelagerten Raumen (11) und einem in letzterem um eine horizontal verlaufende Achse (14) für Elevation schwenkbar gelagerten Träger (15) besteht, auf dem das Zielerfassungsgerät (18, 19 20) und das Entfernungsmeßgerät (16) angeordnet sind.

10. Meßeinrichtung nach Anspruch 9, dadurch gekennzeichnet, daß die Stellantriebe (32, 40) dem den Träger (15) aufnehmenden Rahmen (11) zugeordnet und jeweils mit der Achse (12, 14) für Azimut bzw. Elevation schlupflos wirkverbunden sind.

11. Meßeinrichtung nach Anspruch 10, dadurch gekennzeichnet, daß die Stellantriebe (32, 40) mit der jeweils zugeordneten Achse (12, 14) für Azimut bzw. Elevation über Zahnriementriebe (27, 36) wirkverbunden sind.

12. Meßeinrichtung nach einem der Ansprüche 9 bis 11, dadurch gekennzeichnet, daß der Winkelgeber (45) der Elevations-Achse (14) in bzw. an dem den Träger (15) aufnehmenden Rahmen (11) und der Winkelgeber (44) der Azimut-Achse (12) im Bereich der Lagerung dieser letztgenannten Achse angeordnet sind.

13. Meßeinrichtung nach einem der Ansprüche 5 bis 12, gekennzeichnet durch die übereinanderanordnung des Zielerfassungsgerätes (18, 19, 20) und des Entfernungsmeßgerätes (16).

14. Meßeinrichtung nach einem der Ansprüche 5 bis 13, gekennzeichnet durch eine Kamera (18) mit Weitwinkeloptik und eine Kamera (19) mit Teleobjektiv als Zielerfassungsgerät.

15. Meßeinrichtung nach einem der Ansprüche 5 bis 13, gekennzeichnet durch eine Zoom-Kamera (20) als Zielerfassungsgerät.

16. Meßeinrichtung nach einem der Ansprüche 5 bis 15, dadurch gekennzeichnet, daß der Kamera (18, 19, 20) unmittelbar eine im Strahlengang angeordnete Entfernungsmeßeinrichtung zugeordnet ist.

17. Meßeinrichtung nach einem der Ansprüche 5 bis 15, dadurch gekennzeichnet, daß über zwei im Winkel zueinander angeordnete Kameras ein Stereobild erzeugt wird.

18. Meßeinrichtung nach einem der Ansprüche 5 bis 15, dadurch gekennzeichnet, daß die Anordnungen strahlenresistent sind.

19. Meßeinrichtung nach einem der Ansprüche 5 bis 15, gekennzeichnet durch ein Laser-Entfernungsmeßgerät als Längenmeßeinrichtung.

Fig. 3

Fig. 1

Fig. 2

**Europäisches Patentamt**

# EUROPÄISCHER RECHERCHENBERICHT

Nummer der Anmeldung

**EP 91 11 6742**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X<br>A | DE-A-3 936 966   (JENOPTIK JENA GMBH)<br> (* Spalte 3, Zeile 16 - Spalte 4, Zeile 39; Abbildungen 1,2 *) | 1,2,4<br>5-8,16 | G 01 C 1/02 |
| | - - - | | |
| X | DE-A-3 628 350   (MAYR)<br>* Zusammenfassung; Abbildung 1 * * | 1,2 | |
| | - - - | | |
| X<br>A | DE-A-3 808 972   (HIPP)<br> (* das ganze Dokument *) | 5,7-13,19<br>1,2 | |
| | - - - | | |
| A | DE-A-2 750 933   (HEWLETT-PACKARD CO.)<br>* Seite 11, Zeile 30 - Seite 16, Zeile 16; Abbildung 1 * * | 1,5 | |
| | - - - | | |
| A | DE-A-3 145 823   (CARL ZEISS)<br>* Seite 4, Zeile 33 - Seite 6, Zeile 2; Abbildungen * * | 5,17 | |
| | - - - - - | | |

RECHERCHIERTE SACHGEBIETE (Int. Cl.5)

G 01 C

Der vorliegende Recherchenbericht wurde für alle Patentansprüche erstellt

| Recherchenort | Abschlußdatum der Recherche | Prüfer |
|---|---|---|
| Den Haag | 15 Januar 92 | HOEKSTRA F.R. |